# EUROPÄISCHE PATENTSCHRIFT

(11) **EP 2 695 718 B1**
(45) Veröffentlichungstag und Bekanntmachung des Hinweises auf die Patenterteilung: **09.11.2016**
(21) Anmeldenummer: 13177290.7
(22) Anmeldetag: 19.07.2013
(51) Int. Cl.: B29C 45/26, B29C 47/08, B29C 47/12, B29C 47/90

(54) **Zentrierelement für Werkzeugteilelemente eines Kunststoffverarbeitungswerkzeugs**
Centering element for tool part elements of a plastic processing tool
Elément de centrage pour éléments de pièces d'outil d'un outil de traitement de matière synthétique

(30) Priorität: 08.08.2012 DE 202012102985 U
(43) Veröffentlichungstag der Anmeldung: 12.02.2014
(73) Patentinhaber: Veka AG, 48324 Sendenhorst (DE)
(72) Erfinder: Topp, Alfons, 48317 Drensteinfurt (DE); Kaldewei, Jochen, 59320 Ennigerloh (DE)
(74) Vertreter: Tarvenkorn, Oliver

(56) Entgegenhaltungen:
- DE-A1- 10 235 151
- JP-A- H0 780 568
- JP-A- H03 207 624
- JP-A- 2009 028 996
- JP-U- S5 680 956
- JP-U- S61 162 356

## Beschreibung

Die Erfindung betrifft ein Zentrierelement für Werkzeugteilelemente eines Kunststoffverarbeitungswerkzeugs, mit einem in eine Aufnahmeausnehmung eines ersten Werkzeugteilelements einsetzbaren Klemmkörper und einem sich daran anschließenden konischen Zentrierkörper zum Eingriff in eine Aufnahmeausnehmung eines zweiten Werkzeugteilelements, wobei der Klemmkörper und der Zentrierkörper einen polygonalen Querschnitt besitzen.

Ein Zentrierelement der eingangs genannten Art ist aus der Druckschrift JP 2009 028996 A bekannt.

Beim Bau von Werkzeugen für das Kunststoffspritzgießen oder die Kunststoffextrusion werden üblicherweise Werkzeugteilelemente, sogenannte Normalien, eingesetzt, die übereinander geschichtet und dann miteinander verbunden werden. Der schichtweise Aufbau aus Werkzeugteilelementen hat verschiedene Vorteile wie eine einfachere Herstellung bei spanender Bearbeitung durch kleinere Halbzeuge, eine schnellere Wärmebehandlung aufgrund reduzierter Werkstoffmasse und -dicke, eine einfache Austauschbarkeit verschlissener Teilelemente usw. Das durch die Teileelemente gebildete Werkzeug enthält im Falle des Spritzgusses wenigstens eine zentrale Kavität. Im Falle eines Profilextrusionswerkzeugs handelt es sich bei den Werkzeugen insbesondere um Kalibrierungsblenden, welche eine lichte Öffnung besitzen, durch welche der aus der Formdüse austretende Profilstrang geführt wird, um abzukühlen und durch eine exakte Führung während des Erstarrungsvorgangs die vorgesehene Geometrie beizubehalten bzw. einzunehmen.

Um die vorgesehene Geometrie einzuhalten bzw. einzunehmen ist eine sehr exakte Positionierung aller Werkzeugteilelemente zueinander erforderlich, welche durch die Anordnung der Verschraubungen allein nicht erreicht werden kann. Üblich ist es hierzu wie allgemein im Maschinenbau, zylindrische oder konische Passstifte in gesonderte Bohrungen einzusetzen, und so die einmal eingenommene Positionierung der Werkzeugteilelemente zueinander reproduzierbar zu machen.

Der Nachteil dieser Passstifte besteht darin, dass die einmal eingenommene Position nachträglich nicht mehr verändert werden kann. Soweit es erforderlich ist, die Elemente relativ zueinander neu zu positionieren, müssen auch neue Bohrungen zur Aufnahme der Passstifte hergestellt werden. Gerade bei Kalibrierungswerkzeugen für Kunststoffprofile, bei denen sich oft erst im Laufe eines längeren Prozesses herausstellt, ob einzelne Profilflächen nachgestellt werden müssen, damit die gewünschte Profilgeometrie erhalten wird, ist die wiederholte Verstiftung der Teilelemente sehr mühsam.

Die AT-A 507 973 81 offenbart, dass zwischen einzelnen Werkzeugteilelementen mehrere Zentrierelemente angeordnet sein können, die dazu dienen, die einzelnen Teilelemente zueinander exakt auszurichten und zu positionieren, wobei anschließend an die Positionierung die gegenseitige Halterung aneinander zur Bildung des Extrusionswerkzeugs, beispielsweise durch Verschraubungen, usw. erfolgen kann. Diese Zentrierelemente besitzen bereits zwei runde Teilkörper und einen dazwischen liegenden Bund, der ein zu tiefes Abrutschen des Zentrierelements in eine Aufnahmeausnehmung verhindert. Die Klemmwirkung wird durch einen zusätzlichen Federring erzielt, der als zusätzliches Bauteil beschafft und montiert werden muss. Der Nachteil, dass einmal hergestellte Positionierungen nachträglich nicht mehr verändert werden können, bleibt auch bei diesem Zentrierelement bestehen.

Die Aufgabe der vorliegenden Erfindung besteht somit darin, ein Zentrierelement anzugeben, mit dem einerseits Werkzeugteilelemente lagegenau miteinander verbunden werden können und mit dem andererseits eine Weiterentwicklung dahingehend möglich ist, dass nachträgliche Lagekorrekturen möglich sind, ohne die Aufnahmeausnehmungen an den Werkzeugteilelementen zu verändern.
Diese Aufgabe wird gemäß der vorliegenden Erfindung durch ein Zentrierelement mit den Merkmalen des Schutzanspruchs 1 gelöst, wobei erfindungswesentlich ist, dass der Zentrierkörper exzentrisch versetzt zum Klemmkörper angeordnet ist, wobei der Zentrierkörper um ein Maß E parallel zu einer der Kanten des rechteckigen Klemmkörpers versetzt angeordnet ist.

Daraus ergeben sich mehrere Anwendungsformen:
Zunächst können vorhandene runde Aufnahmeausnehmungen weiter benutzt werden, um das erfindungsgemäße Zentrierelement in einer Trennebene zwischen zwei Werkzeugteilelementen zu platzieren und in herkömmlicher Weise zur exakten Positionierung zu nutzen.

Besonders vorteilhaft ist das erfindungsgemäße Zentrierelement jedoch dann, wenn es in kompatible eckige Aufnahmeausnehmungen in den Werkzeugteilelementen eingesetzt wird, denn dann ergibt sich eine Verdrehsicherheit der eingesetzten Zentrierelemente. Es ist damit gewährleistet, dass ein Zentrierelement seine vorgesehene Lage in der Trennebene zwischen den Teilelementen beibehält und auch nach einer Demontage und erneuten Montage jederzeit wieder einnimmt, sofern der Benutzer es nicht falsch herum einsetzt. Um dem entgegenzuwirken ist vorzugsweise eine besondere Markierung wie etwa ein punktuell angefeilter Bund vorgesehen.

Vorzugsweise besitzen der Klemmkörper und der Zentrierkörper einen rechteckigen Querschnitt, wobei die Querschnitte des Klemmkörpers und des Zentrierkörpers im Bereich ihrer jeweiligen größten Ausdehnung gleich sind. Klemmkörper und Zentrierkörper können somit in gleichartige Aufnahmeausnehmungen eingesetzt werden, so dass insbesondere auch durchgängige Aufnahmeausnehmungen durch einen Stapel von Werkzeugteilelementen hergestellt werden können.

Insbesondere besitzen der Klemmkörper und der Zentrierkörper einen quadratischen Querschnitt, wobei der Zentrierkörper und/oder der Klemmkörper pyramidenstumpfartig ausgebildet ist (sind). Dabei wiederum ist bevorzugt vorgesehen, dass sich der Zentrierkörper unterhalb des konischen Bereichs in einen Bereich mit konstantem Querschnitt fortsetzt. Der konische Bereich dient nur dazu, die zu verbindenden Teile in die vorgesehene Lage zu bringen. Ist diese erreicht, stützt sich der durchgängige Bereich darunter an der Wand der Aufnahmeausnehmung ab.

Während die aus der bei der Erfindung vorgesehenen mehreckigen Form resultierende Verdrehsicherheit nicht unbedingt erforderlich ist, sofern der Klemmkörper und der Zentrierkörper mit ihren Mittelachsen fluchtend angeordnet sind, ergibt sich der besondere Vorteil dann, wenn der Zentrierkörper exzentrisch versetzt zum Klemmkörper angeordnet ist. Insbesondere ist der Zentrierkörper um ein Maß E parallel zu einer der Kanten eines rechteckigen Klemmkörpers versetzt angeordnet.

Mit diesem Versatz wird es möglich, durch eine geeignete Auswahl des Versatzmaßes E nachträgliche relative Verschiebungen benachbarter Teileelemente in der Trennebene herbeizuführen, ohne neue Ausnehmungen in die Werkzeugteilelemente einbringen zu müssen.

Bei rechteckigen Werkzeugteilelementen und quadratischen Zentrierelementen kann eine Verschiebung in der Trennebene grundsätzlich parallel zu beiden Koordinaten eines kartesischen Koordinatensystems erfolgen, wobei bei einer Kalibrierblende für die Profilextrusion lediglich eine Verschiebung auf die zentrale Ausnehmung hin oder davon weg, also quer zur Profilabzugsrichtung, relevant ist.

Erweist es sich beispielsweise bei einem bereits montierten und zentrierten Werkzeug nachträglich als erforderlich, eine Seitenwand der Kalibrierblende um z.B. 1/10 mm enger anzustellen, so wird an wenigstens zwei Stellen in der Trennebene der Teilelemente, die diese Seitenwand bilden, jeweils ein erfindungsgemäßes Zentrierelement mit einem Versatz von E=0,1 mm eingesetzt. Werden diese Zentrierelemente um 180° gewendet eingesetzt, so ergibt sich eine Verschiebung gegenüber der Null-Lage in die andere Richtung.

Aufgrund der bei dem erfindungsgemäßen Zentrierelement gegebenen Verdrehsicherheit braucht in einer Trennebene zwischen zwei Werkzeugteileelementen theoretisch sogar lediglich ein Zentrierelement vorgesehen zu sein, um eine exakte relative Lagepositionierung benachbarter Werkzeugteilelemente zu ermöglichen. Da jedoch ein gewisses Spiel erforderlich ist, um die Zentrierelemente überhaupt in die Aufnahmeausnehmungen einsetzen und wieder daraus entnehmen zu können, ist es besser, zwei Zentrierelemente an voneinander entfernten Punkten einzusetzen. Während bei zwei runden Zentrierelementen mit jeweils zueinander exzentrisch versetztem Klemmkörper und Zentrierkörper zwei rotatorische Freiheitsgrade geschaffen würden und damit die Position der aneinander liegenden Bauteile nicht exakt festgelegt wäre, wird erfindungsgemäß aufgrund der mehreckigen Form durch lediglich zwei Zentrierelemente eine absolut definierte Lage der darüber verbundenen Teilelemente in der Trennebene eingenommen.

Besonders vorteilhaft ist es, mehrere Zentrierelemente der Erfindung zu einem Zentrierelementesystem zusammenzufassen, um nachträgliche Lagekorrekturen vornehmen zu können. Dabei ist zumindest ein erstes Zentrierelement vorgesehen, bei dem kein Versatz vorhanden ist. Das System umfasst dann wenigstens ein weiteres Zentrierelement mit einem Versatz, insbesondere mehrere Zentrierelemente mit zueinander abgestuftem Versatz E zwischen dem Zentrierkörper und dem Klemmkörper. Durch Wahl eines geeigneten Zentrierelements aus der Reihe abgestufter Zentrierelemente kann in einfacher Weise eine nachträgliche Feinpositionierung benachbarter Bauteile erreicht werden.

Eine bevorzugte Ausführungsform des Zentrierelements sieht vor, dass zwischen dem Klemmkörper und dem Zentrierkörper ein nach außen vorstehender Bund angeordnet ist, der die exakte axiale Positionierung der Zentrierelemente bewirkt.

Um die Montage der Werkzeugteileelemente weiter zu erleichtern, kann vorgesehen sein, dass der Klemmkörper wenigstens zwei voneinander getrennte Teilabschnitte umfasst, die durch ein zentral eingebrachtes Element nach außen voneinander abspreizbar sind.

Damit können die Zentrierelemente zunächst in eines der Werkzeugteilelemente eingesetzt und darin fixiert werden. Durch die feste Klemmung mit den Abspreizelementen sitzen die Zentrierelemente auch dann fest, wenn beispielsweise eine Überkopfmontage erforderlich ist oder wenn mit Hammerschlägen auf die Werkzeugteileelemente eingewirkt wird.

Die Erfindung wird nachfolgend mit Bezug auf die Zeichnung näher erläutert. Die Figuren zeigen im Einzelnen:
- Fig. 1a: ein erstes Zentrierelement in perspektivischer Darstellung von oben;
- Fig. 1b: das Zentrierelement in perspektivischer Darstellung von unten;
- Fig. 1c: das Zentrierelement in seitlicher Ansicht;
- Fig. 1d: das Zentrierelement in Schnittansicht;
- Fig. 2: ein erfindungsgemäßes Zentrierelement in seitlicher Ansicht und
- Fig. 3a, 3b: jeweils eine Kalibrierblende für die Profilextrusion mit eingebauten Zentrierelementen im Schnitt.

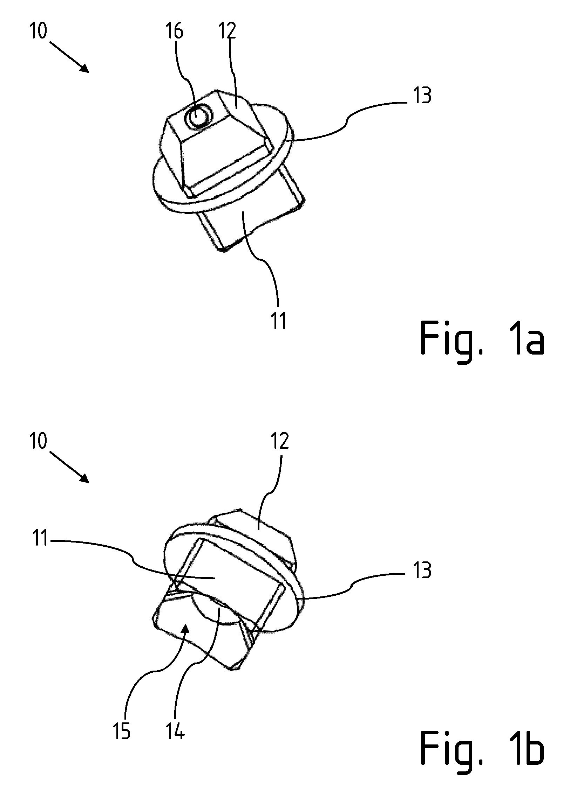

Figur 1a zeigt ein erstes Zentrierelement 10, das im unteren Bereich einen Klemmkörper 11 mit quadratischem Querschnitt, einen Bund 13 und einen darüber angeordneten, pyramidenstumpfförmigen Zentrierkörper 12 besitzt. Oben auf dem Zentrierkörper 12 ist eine Markierung angebracht, die das Maß eines möglichen seitlichen Versatzes zwischen dem Klemmkörper 11 und dem Zentrierkörper 12 angibt.

Figur 1b zeigt das Zentrierelement 10 mehr von der Unterseite her. Erkennbar ist, dass der Klemmkörper 11 eine zentrale Ausnehmung 14 aufweist sowie eine Ausnehmung 15 zur Aufnahme eines Schraubenkopfes.

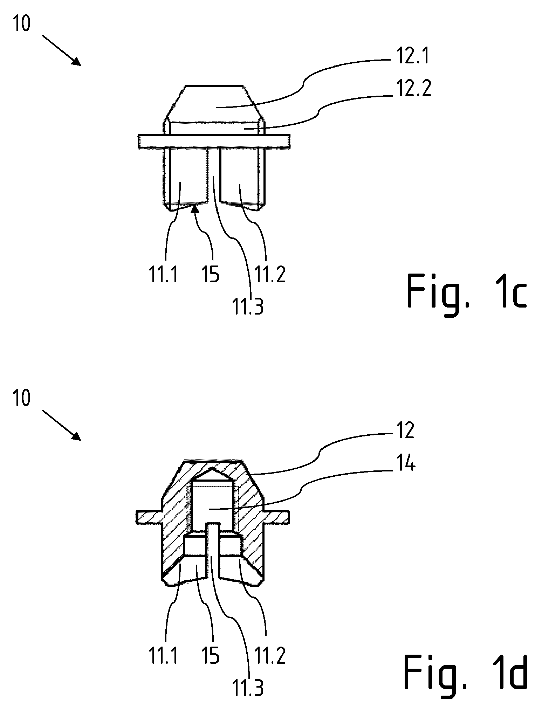

Figur 1c zeigt das Zentrierelement 10 von der Seite. Deutlich erkennbar ist zum einen die Ausbildung des Zentrierkörpers 12, zum anderen die Ausbildung des Klemmkörpers 11. Der Zentrierkörper 12 unterteilt sich in einen oberen Bereich 12.1 nach Art eines Pyramidenstumpfes, der allein der Zentrierung dient, wenn er in eine Ausnehmung eines benachbarten Bauteils eingeschoben wird. Ist die gewünschte Lage dann erreicht, kann die Abstützung über die seitlichen Flanken des darunter liegenden Bereichs 12.2 mit konstanten Querschnitt erfolgen.

Der Klemmkörper 11 ist durch einen durchgehenden Schlitz 11.3, der bis zum Bund 13 reicht, in zwei Teilabschnitte 11.1, 11.2 geteilt, die voneinander abspreizbar sind.

Figur 1d zeigt einen Schnitt durch das Zentrierelement 10 und dabei insbesondere die Gewindebohrung 14 sowie die Aufnahme 15 für einen Kopf einer Senkkopfschraube. Wird eine solche Schraube eingesetzt, drückt sie die Teilabschnitte 11.1, 11.2 auseinander, wodurch der Klemmabschnitt 11 in einer Aufnahmeausnehmung eines Werkzeugteileelementes verklemmt wird und damit das Zentrierelement 10 besonders effektiv gegen Herausfallen sichert. Bei dem in den Figuren 1a bis 1d gezeigten Zentrierelement 10 liegen Klemmkörper 11 und Zentrierkörper 12 jeweils in Flucht auf einer gemeinsamen Mittelachse.

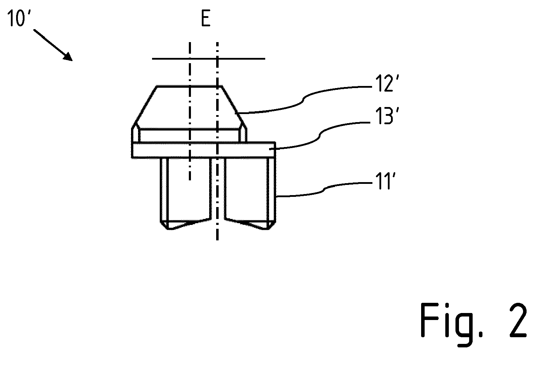

In Figur 2 hingegen ist in seitlicher Ansicht eine erfindungsgemäße Ausführungsform eines Zentrierelements 10' dargestellt, bei der der Zentrierkörper 12 gegenüber dem Klemmkörper 11 um ein Maß E seitlich versetzt angeordnet ist. Dabei ist die Darstellung in Figur 2 bewusst überzeichnet, um den Versatz E deutlich kenntlich zu machen. Bei einem realen Zentrierelement 10' kann der Versatz E auch sehr viel kleiner ausfallen; beispielsweise weniger als 0,1 mm bei einer Kantenlänge von etwa 8 mm betragen.

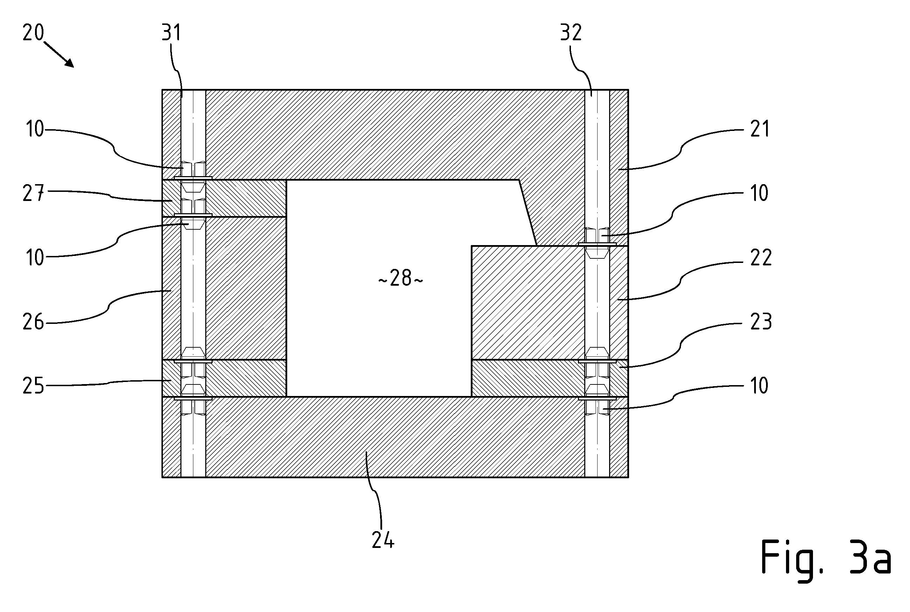

Figur 3a zeigt eine Einbausituation für Zentrierelemente 10, 10'. Gezeigt ist im Schnitt ein Kunststoffverarbeitungswerkzeug 20 in Form einer Kalibrierblende für die Profilextrusion. Die innen liegende Öffnung 28 dient dabei der Führung des Profilstrangs und besitzt hier die typische Kontur eines Fensterprofils. Das Kunststoffverarbeitungswerkzeug 20 ist aus einer Vielzahl von schichtweise übereinander gestapelten Werkzeugteileelementen 21, ..., 27 gebildet, die an einer hier nicht erkennbaren Stelle miteinander verschraubt sind. Beidseits der zentralen Ausnehmung 28 sind Aufnahmeausnehmungen 31, 32 eingebracht, die sich im dargestellten Ausführungsbeispiel durch sämtliche Werkzeugteileelemente 21, ..., 27 hindurch erstrecken.

In einer Bodenplatte 25 sind zwei Zentrierelemente 10 mit ihren Klemmkörpern 11 eingesetzt, so dass deren Zentrierkörper 12 nach oben weisen. Darauf aufgesetzt sind weitere plattenförmige Teilelemente 23, 25. Diese besitzen auch einen Teilabschnitt der Aufnahmeausnehmungen 31, 32, in welche die Zentrierkörper 12 eingreifen.

An einer Deckenplatte 21 sind ebenfalls zwei Zentrierelemente 10 mit ihren Klemmkörpern 11 eingesetzt, wobei deren Zentrierkörper 12 nach unten weisen und in weitere Teilelemente 22, 27 greifen.

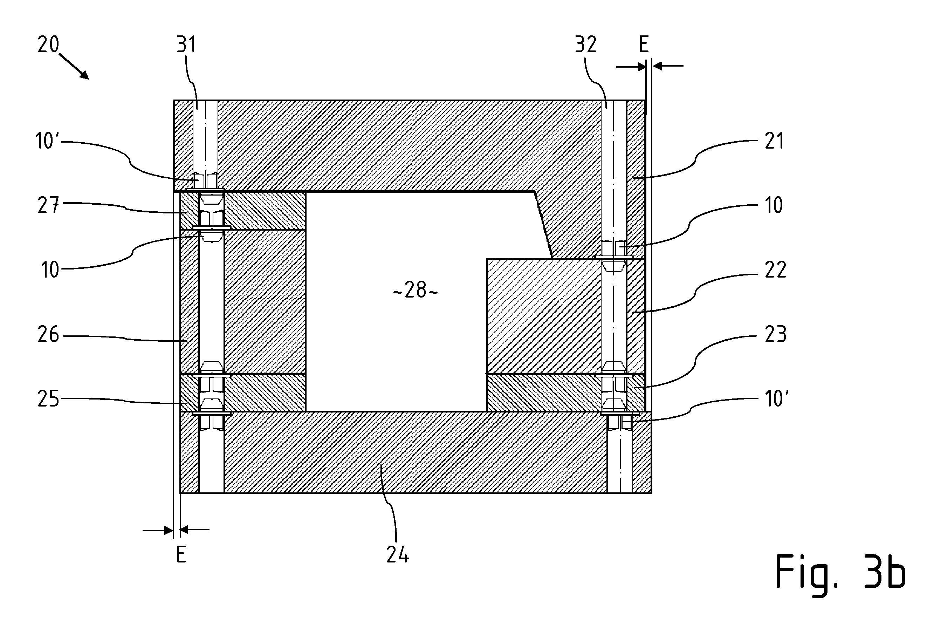

Ist nun eine Veränderung in der Kontur der inneren Ausnehmung 28 erforderlich, werden dagegen die erfindungsgemäßen Zentrierelemente 10' eingesetzt. In Figur 3b sind an der Trennebene zwischen dem Teilelementen 21 und 27 sowie zwischen den Teilelementen 23 und 24 solche Zentrierelemente 10' eingesetzt worden, so dass der obere Teil des Werkzeugs 20, welcher aus den Elementen 21, 22 und 23 gebildet ist gegenüber dem anderen Teil, der aus den Elementen 24, 25, 26 und 27 besteht, nach links gerückt ist, so dass die Breite der formgebenden inneren Ausnehmung 28 um das Maß E reduziert worden ist.

## Patentansprüche

1. Zentrierelement (10; 10') für Werkzeugteilelemente (21, ..., 27) eines Kunststoffverarbeitungswerkzeugs (20),
mit einem in eine Aufnahmeausnehmung (31, 32) eines ersten Werkzeugteilelements (21, ..., 27) einsetzbaren Klemmkörper (11; 11') und einem sich daran anschließenden konischen Zentrierkörper (12; 12') zum Eingriff in eine Aufnahmeausnehmung (31, 32) eines zweiten Werkzeugteilelements (21, ..., 27), wobei der Klemmkörper (11; 11') und der Zentrierkörper (12; 12') einen polygonalen Querschnitt besitzen,
**dadurch gekennzeichnet, dass** der Zentrierkörper (12, 12') exzentrisch versetzt zum Klemmkörper (11; 11') angeordnet ist, wobei der Zentrierkörper(12, 12') um ein Maß E parallel zu einer der Kanten des rechteckigen Klemmkörpers (11; 11') versetzt angeordnet ist.

2. Zentrierelement (10; 10') nach Anspruch 1, **dadurch gekennzeichnet, dass** der Klemmkörper (11; 11') und der Zentrierkörper (14) einen rechteckigen Querschnitt besitzen und dass die Querschnitte des Klemmkörpers (11; 11') und des Zentrierkörpers (12; 12') im Bereich ihrer jeweiligen größten Ausdehnung gleich sind.

3. Zentrierelement(10; 10') nach Anspruch 2, **dadurch gekennzeichnet, dass** der Klemmkörper (11; 11') und der Zentrierkörper (12; 12') einen quadratischen Querschnitt besitzen und der Zentrierkörper (12; 12') und/oder der Klemmkörper (11; 11') pyramidenstumpfartig ausgebildet ist (sind).

4. Zentrierelement (10; 10') nach wenigstens einem der vorhergehenden Ansprüche 1 bis 3, **dadurch gekennzeichnet, dass** zwischen dem Klemmkörper (11; 11') und dem Zentrierkörper (12; 12') ein nach außen vorstehender Bund (13) angeordnet ist.

5. Zentrierelement (10; 10') nach Anspruch 4, **dadurch gekennzeichnet, dass** der Bund (13) eine Lagemarkierung enthält.

6. Zentrierelement (10; 10') nach wenigstens einem der vorhergehenden Ansprüche, **dadurch gekennzeichnet, dass** sich der Zentrierkörper (12; 12') unterhalb des konischen Bereichs (12.1) in einem Bereich (12.2) mit konstantem Querschnitt fortsetzt.

7. Zentrierelement (10; 10') nach wenigstens einem der vorhergehenden Ansprüche, **dadurch gekennzeichnet, dass** der Klemmkörper (11; 11') wenigstens zwei voneinander getrennte Teilabschnitte (11., 11.2; 11.1', 11.2') umfasst, die durch ein zentral eingebrachtes Element nach außen abspreizbar sind.

8. Zentrierelement (10; 10') nach Anspruch 7, **dadurch gekennzeichnet, dass** die Teilabschnitte (11., 11.2;
11.1', 11.2') durch eine Schraube abspreizbar sind, die in eine zentrale Gewindebohrung (14; 14') eingreift, wobei am unteren Ende des Klemmkörpers (11;
11') eine Aufnahme (15; 15') für einen Schraubenkopf ausgebildet ist.

9. Zentrierelementesystem für Werkzeugteilelemente (21, ..., 27) eines Kunststoffverarbeitungswerkzeugs (20), bestehend aus einem ersten Zentrierelement (10) nach wenigstens einem der vorhergehenden Ansprüche, bei dem die Mittelachsen des Klemmkörpers (11) und des Zentrierkörpers (12) fluchten, und aus wenigstens einem weiteren Zentrierelement (10') nach Anspruch 4 oder einem der nachfolgenden Ansprüche, bei welchem der Zentrierkörper (12') zum Klemmkörper (11') um ein Maß E versetzt angeordnet ist.

10. Kunststoffverarbeitungswerkzeug (20) mit mehreren übereinander geschichtet angeordneten Werkzeugteilelementen (21, ..., 27), die jeweils an wenigstens zwei voneinander entfernten Zentrierstellen Aufnahmeausnehmungen (31, 32) aufweisen, in die ein Zentrierelement (10; 10') nach wenigstens einem der vorhergehenden Ansprüche einsetzbar ist.

11. Kunststoffverarbeitungswerkzeug (20) nach Anspruch 10, **dadurch gekennzeichnet, dass** die Aufnahmeausnehmungen (31, 32) eine dem größten Querschnitt der Klemmkörper (11; 11') und der Zentrierkörper (12; 12') entsprechenden polygonalen Querschnitt besitzen.

## Claims

1. Centring element (10; 10') for mould sub-elements (21, ..., 27) of a plastics-processing mould (20),
having a clamping body (11; 11'), which can be inserted into an accommodating aperture (31, 32) of a first mould subelement (21, ..., 27), and a conical centring body (12; 12'), which adjoins the clamping body and is intended for engaging in an accommodating aperture (31, 32) of a second mould subelement (21, ..., 27), wherein the clamping body (11; 11') and the centring body (12; 12') have a polygonal cross section, **characterized in that** the centring body (12; 12') is offset eccentrically in relation to the clamping body (11; 11'), wherein the centring body (12, 12') is offset by an amount E parallel to one of the edges of the rectangular clamping body (11; 11').

2. Centring element (10; 10') according to Claim 1, **characterized in that** the clamping body (11; 11') and the centring body (14) have a rectangular cross section, and **in that** the cross sections of the clamping body (11; 11') and of the centring body (12; 12'), in the region of the greatest extent of said bodies, are identical.

3. Centring element (10; 10') according to Claim 2, **characterized in that** the clamping body (11; 11') and the centring body (12; 12') have a square cross section and a centring body (12; 12') and/or the clamping body (11; 11') is (are) designed in the manner of a truncated pyramid.

4. Centring element (10; 10') according to at least one of preceding Claims 1 to 3, **characterized in that** an outwardly projecting collar (13) is arranged between the clamping body (11; 11') and the centring body (12; 12').

5. Centring element (10; 10') according to Claim 4, **characterized in that** the collar (13) contains a position marking.

6. Centring element (10; 10') according to at least one of the preceding claims, **characterized in that** the centring body (12; 12'), beneath the conical region (12.1), continues in a region (12.2) of constant cross section.

7. Centring element (10; 10') according to at least one of the preceding claims, **characterized in that** the clamping body (11; 11') comprises at least two separate sub-portions (11., 11.2; 11.1', 11.2'), which can be spread apart outwards by a centrally introduced element.

8. Centring element (10; 10') according to Claim 7, **characterized in that** the sub-portions (11., 11.2; 11.1', 11.2') can be spread apart by a screw which engages in a central threaded bore (14; 14'), wherein a mount (15; 15') for a screw head is formed at the lower end of the clamping body (11; 11').

9. Centring-element system for mould sub-elements (21, ..., 27) of a plastics-processing mould (20), comprising a first centring element (10) according to at least one of the preceding claims, the centre axes of the clamping body (11) and of the centring body (12) of said first centring element being in alignment, and also comprising at least one further centring element (10') according to Claim 4 or one of the following claims, the centring body (12') of said further centring element being offset by an amount E in relation to the clamping body (11').

10. Plastics-processing mould (20) having a plurality of mould sub-elements (21, ..., 27) which are layered one above the other and each have, at at least two mutually remote centring locations, accommodating apertures (31, 32) into which a centring element (10; 10') according to at least one of the preceding claims can be inserted.

11. Plastics-processing mould (20) according to Claim 10, **characterized in that** the accommodating apertures (31, 32) have a polygonal cross section corresponding to the largest cross section of the clamping bodies (11; 11') and of the centring bodies (12; 12').

## Revendications

1. Elément de centrage (10; 10') pour des éléments de parties d'outil (21, ..., 27) d'un outil de traitement de matière synthétique (20),
avec un corps de serrage (11; 11') insérable dans un évidement de réception (31, 32) d'un premier élément de partie d'outil (21, ..., 27) et avec un corps de centrage conique (12; 12') se raccordant à celui-ci à engager dans un évidement de réception (31, 32) d'un deuxième élément de partie d'outil (21, ..., 27), dans lequel le corps de serrage (11; 11') et le corps de centrage (12; 12') possèdent une section transversale polygonale, **caractérisé en ce que** le corps de centrage (12, 12') est disposé en décalage excentrique par rapport au corps de serrage (11; 11'), dans lequel le corps de centrage (12, 12') est disposé en décalage d'une cote E parallèlement à un des bords du corps de serrage rectangulaire (11; 11').

2. Elément de centrage (10; 10') selon la revendication 1, **caractérisé en ce que** le corps de serrage (11; 11') et le corps de centrage (14) ont une section transversale rectangulaire et **en ce que** les sections transversales du corps de serrage (11; 11') et du corps de centrage (12; 12') sont égales dans la région de leur plus grande extension respective.

3. Elément de centrage (10; 10') selon la revendication 2, **caractérisé en ce que** le corps de serrage (11; 11') et le corps de centrage (12; 12') ont une section transversale carrée et le corps de centrage (12; 12') et/ou le corps de serrage (11; 11') est/sont en forme de tronc de pyramide.

4. Elément de centrage (10; 10') selon au moins une des revendications précédentes 1 à 3, **caractérisé en ce qu'**un collet (13) saillant vers l'extérieur est disposé entre le corps de serrage (11; 11') et le corps de centrage (12; 12').

5. Elément de centrage (10; 10') selon la revendication 4, **caractérisé en ce que** le collet (13) comporte un marquage de position.

6. Elément de centrage (10; 10') selon au moins une des revendications précédentes, **caractérisé en ce que** le corps de centrage (12; 12') se prolonge en dessous de la région conique (12.1) en une région (12.2) de section transversale constante.

7. Elément de centrage (10; 10') selon au moins une des revendications précédentes, **caractérisé en ce que** le corps de serrage (11; 11') comprend au moins deux parties partielles (11., 11.2; 11.1', 11.2') séparées l'une de l'autre, qui sont expansibles vers l'extérieur par un élément introduit au centre.

8. Elément de centrage (10; 10') selon la revendication 7, **caractérisé en ce que** les parties partielles (11., 11.2; 11.1', 11.2') sont expansibles au moyen d'une vis, qui s'engage dans un alésage fileté central (14; 14'), dans lequel un logement (15; 15') pour une tête de vis est formé à l'extrémité inférieure du corps de serrage (11; 11').

9. Système d'éléments de centrage pour des éléments de parties d'outil (21, ..., 27) d'un outil de traitement de matière synthétique (20), se composant d'un premier élément de centrage (10) selon au moins une des revendications précédentes, dans lequel les axes centraux du corps de serrage (11) et du corps de centrage (12) sont en alignement, et d'au moins un autre élément de centrage (10') selon la revendication 4 ou l'une quelconque des revendications suivantes, dans lequel le corps de centrage (12') est disposé avec un décalage de cote E par rapport au corps de serrage (11').

10. Outil de traitement de matière synthétique (20) avec plusieurs éléments de parties d'outil (21, ..., 27) disposés en couches l'un au-dessus de l'autre, qui présentent respectivement à au moins deux points de centrage éloignés l'un de l'autre des évidements de réception (31, 32), dans lesquels un élément de centrage (10; 10') selon au moins une des revendications précédentes peut être inséré.

11. Outil de traitement de matière synthétique (20) selon la revendication 10, **caractérisé en ce que** les évidements de réception (31, 32) présentent une section transversale polygonale correspondant à la plus grande section transversale des corps de serrage (11; 11') et des corps de centrage (12; 12').
